# EUROPEAN PATENT APPLICATION

(11) **EP 4 376 026 A1**
(43) Date of publication of application: **29.05.2024**
(21) Application number: 22211967.9
(22) Date of filing: 07.12.2022
(51) Int. Cl.: H01B 7/04, H01B 7/08, H01B 7/42, H02G 11/02, B63B 21/20

(54) **CHARGING CABLE**

(30) Priority: 22.11.2022 SE 2251363
(71) Applicant: Volvo Penta Corporation, 405 08 Göteborg (SE)
(72) Inventor: SÄLLBERG, Joakim, 413 27 Göteborg (SE)
(74) Representative: Valea AB

(57) **Abstract**

The disclosure relates to a charging cable (103) for charging an at least partly electrically driven marine vessel (100). The charging cable (103) has an at least substantially flat cross-section and is arranged to be rolled up onto a cable reel (108).

## Description

### TECHNICAL FIELD

The disclosure relates generally to a charging cable, a charging station and an at least partly electrically driven marine vessel. In particular aspects, the disclosure relates to charging of an at least partly electrically driven marine vessel. The disclosure can be applied in any at least partly electrically driven marine vessels, such as boats, marine leisure crafts, jet skis, personal watercrafts, ships, tankers, freighters, submarines etc. The marine vessel may be referred to as a water vessel, waterborne vessel, water vehicle etc. Although the disclosure may be described with respect to a particular marine vessel, the disclosure is not restricted to any particular marine vessel.

### BACKGROUND

As in many technical fields, marine vessels are also subject to electrification. With the electrification of marine vessels, there is a need for development and improvements of various aspects related to at least partly electrically driven marine vessels. Charging of the at least partly electrically driven marine vessel is one aspect with a need for development and improvements. There are several components involved in charging the at least partly electrically driven marine vessel, for example the charging cable, the battery onboard the marine vessel, the offboard charging station etc. Today, charging cables are of circular cross-section. For the electrification to continue increasing, it is for example is desirable that the charging cable is convenient to use and easy to store, that the battery provides sufficient range, that the offboard charging station provides quick and stable charging etc.

In view of the above, there is a strive to develop further improved technology relating to charging of an at least partly electrically driven marine vessel.

### SUMMARY

According to a first aspect of the disclosure, a charging cable for charging an at least partly electrically driven marine vessel is provided. The charging cable has an at least substantially flat cross-section and is arranged to be rolled up onto a cable reel.

The first aspect of the disclosure may seek to provide an improved charging cable. A technical benefit may include that an improved charging cable is provided. With the at least substantially flat cross-section, it is easy to roll the cable onto the cable real without or with a reduced risk for the cable becoming tangled, twisted etc., and this makes the charging cable easy to handle for a user when rolling the charging cable out from the cable reel and when rolling the charging cable onto the cable reel after the charging is finished.

The at least substantially flat cross-section enables the charging cable to be compactly arranged when rolled upon to the cable reel, thus taking less space, and provides a clean and organized appearance.

In some examples, the charging cable may comprise a structural reinforcement layer to function as a mooring rope for the marine vessel.

A technical benefit may include that there is no need for a separate mooring rope for the marine vessel. When the charging cable functions as a mooring rope for the marine vessel, the process of mooring when the marine vessel is to be charged is easy since there is only one connection point between the marine vessel and the charging station, as compared to one separate mooring rope and a separate charging cable.

In some examples, the charging cable may comprise a cooling system, and the cooling system may comprise a coolant. The coolant may be circulating or non-circulating in the cooling system. The coolant may be any suitable coolant. The coolant may be a liquid, a gel, a gas etc.

A technical benefit may include that it removes or reduces the risk for overheating of the charging cable and/or power electronics onboard the marine vessel and in a land-based charging station.

In some examples, the charging cable may be arranged to be connected to a land-based charging station in a first end and to the marine vessel in a second end, or the charging cable may be arranged to be connected to a sea-based charging station in the first end and to the marine vessel in the second end.

A technical benefit of a land-based charging station may be that it is easy to access in case of maintenance and repairs. A land-based charging station may be used to charge other entities, e.g. at least partly electrically driven bicycles, at least partly electrically driven electric vehicles etc., in addition to charging the at least partly electrically driven marine vessel. Thus, the land-based charging station may be a combined charging station arranged to charge the at least partly electrically driven marine vessel and land-based entities.

A technical benefit of a sea-based charging station may be that it is not necessary for the at least partly electrically driven marine vessel to go to land for charging. The charging may be done while the at least partly electrically driven marine vessel is at sea. The at least partly electrically driven marine vessel does not have to spend electrical power on traveling to land for charging and may instead use its electrical power for traveling to its destination.

In some examples, the charging cable may comprise an outer layer made of a waterproof material.

A technical benefit of the waterproof material may be that the charging cable may be located in water during charging and is not damaged by this. The waterproof material provides protection for components of the charging cable that does not stand water, e.g. electric circuits.

According to a second aspect of the disclosure, there is provided a charging station comprising a charging cable according to the first aspect.

In some examples, the charging station may comprise a cable reel arranged to store the rolled-up charging cable.

A technical benefit of the cable reel may be that it provides an easy storage for the charging cable. Furthermore, it is easy to roll the charging cable onto the cable reel and to roll the charging cable off the cable reel.

Technical benefits of the second aspect of the disclosure are largely analogous to the advantages and effects of the first aspect of the disclosure. It shall also be noted that all examples of the second aspect of the disclosure are combinable with all examples of the first aspect of the disclosure, and vice versa.

According to a third aspect of the disclosure, there is provided an at least partly electrically driven marine vessel comprising a charging cable according to the first aspect.

Technical benefits of the third aspect of the disclosure are largely analogous to the advantages and effects of the first and second aspects of the disclosure. It shall also be noted that all examples of the third aspect of the disclosure are combinable with all examples of the first and second aspects of the disclosure, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary drawing illustrating an at least partly electrically driven marine vessel, according to one example.
**FIG. 2** is an exemplary drawing illustrating an at least partly electrically driven marine vessel being charged via a charging cable, according to one example.
**FIG. 3** is an exemplary drawing illustrating a charging cable rolled upon onto a cable reel, according to one example.
**FIG. 4** is an exemplary 3D illustration of a charging cable, according to one example.
**FIG. 5** is an exemplary drawing illustrating a cross-section of a charging cable, according to one example.
**FIG. 6** is an exemplary drawing illustrating a charging cable comprising a cooling system, according to one example.

### DETAILED DESCRIPTION

Aspects set forth below represent the necessary information to enable those skilled in the art to practice the disclosure.

For the electrification of marine vessels to continue increasing, it is for example desirable that the charging cable is convenient to use and easy to store, that the battery provides sufficient range, that the offboard charging station provides quick and stable charging etc. Therefore, it is a strive to develop further improved technology relating to charging of an at least partly electrically driven marine vessel.

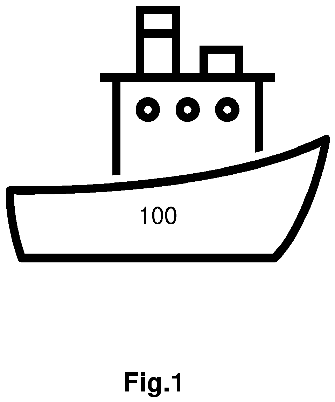

**FIG. 1** is an exemplary drawing illustrating an at least partly electrically driven marine vessel **100,** according to one example.

The at least partly electrically driven marine vessel **100** may be for example a boat, marine leisure craft, jet ski, personal watercraft, ship, tanker, freighter, submarine etc. The at least partly electrically driven marine vessel **100** may be referred to as a water vessel, waterborne vessel, water vehicle etc. The term marine vessel together with the reference number 100 may be used herein for the sake of simplicity when referring to the at least partly electrically driven marine vessel **100.**

The term least partly electrically driven may refer to that the marine vessel **100** is completely electrically driven or that it may be partly electrically driven and partly driven by another driving unit, e.g. a combustion engine, fuel cell etc. When the marine vessel **100** is partly electrically driven and partly driven by another driving unit, it may be referred to as a hybrid marine vessel. In order to be at least partly electrically driven, the marine vessel **100** comprises at least one battery (not shown in **FIG. 1****),** i.e. a rechargeable battery. The at least one battery may be of any suitable type and size arranged to be comprised in the at least partly electrically driven marine vessel **100.** The marine vessel **100** also comprises an onboard charger (not shown in **FIG. 1****)** which is necessary for charging the battery.

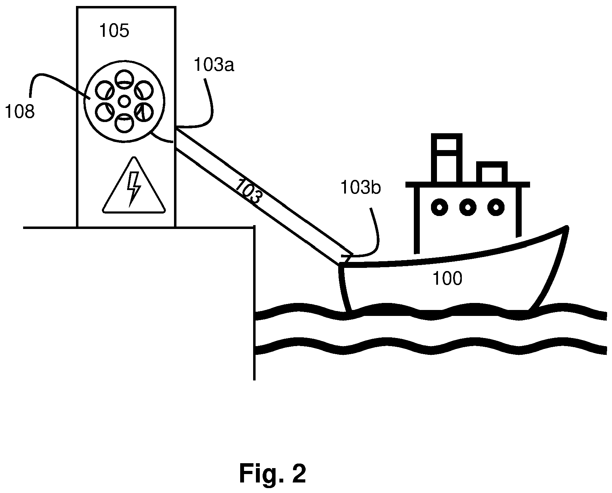

**FIG. 2** is an exemplary drawing illustrating an at least partly electrically driven marine vessel **100** being charged via charging cable **103,** according to one example.

In order for the marine vessel **100** to be charged via a charging cable **103,** it comprises a charging port (not shown) arranged to receive and connect to the charging cable **103.** The charging port may be referred to as a vessel inlet.

A charging station **105** is arranged to provide power to the marine vessel **100** via the charging cable **103** when the charging cable **103** is connected to the charging station **105** in a first end **103a** and to the marine vessel **100** in a second end **103b.** The charging station **105** may be land-based or sea-based. When the charging station **105** is land-based, it may be located on e.g. a quay. When the charging station **105** is sea-based, it may be located on a floating unit, on another marine vessel etc.

The charging cable **103** may be comprised in the charging station **105,** or the charging cable **103 or** the charging cable **103** may be comprised in the marine vessel **100.** The charging cable **103** may be fixedly mounted to the charging station **105** or to the marine vessel **100** in one end.

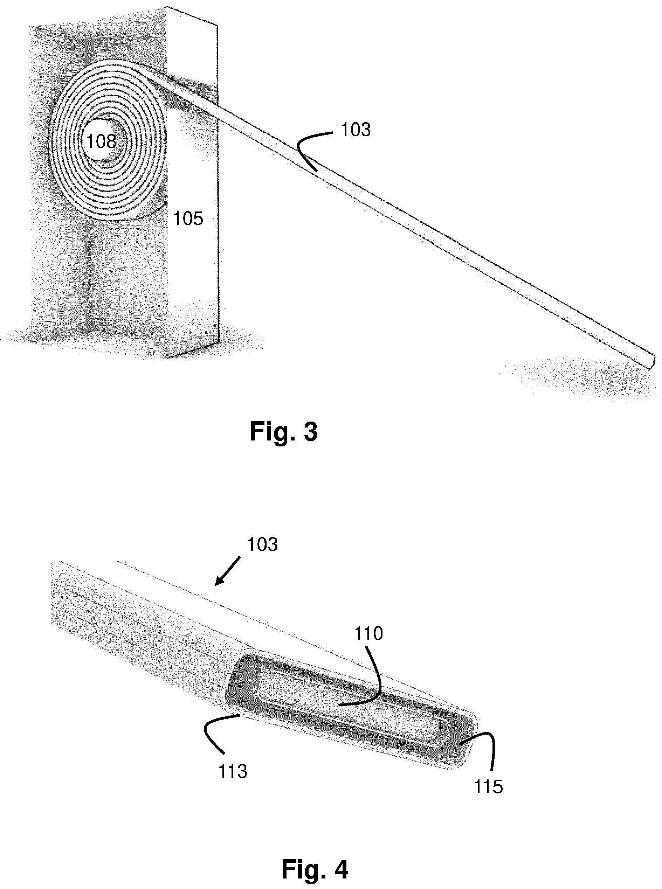

The charging cable **103** is arranged to be rolled up onto a cable reel **108.** The cable reel **108** may be comprised in the charging station **105,** as exemplified in **FIG. 2** and in **FIG. 3****,** or it may be comprised in the marine vessel **100.** The cable reel **108** may be of any suitable type and size.

The charging cable **103** when comprised in the charging station **105** and rolled up ono the cable reel **108** is exemplified in **FIG. 3****.** As exemplified in **FIG. 3****,** the charging station **105** comprises a slot through which the charging cable **103** runs. The cable reel **108** may be incorporated into the outer box of the charging station **105** such that it may be protected therein when it is rolled up.

Instead of being comprised in the charging station **105,** the cable reel **108** may be portable such that a user may carry it, including the charging cable **103,** to any suitable location. For example, it may be convenient to have a portable cable reel **108** with the charging cable **103** located onboard the marine vessel **100** in case the charging station **105** does not have its own charging cable **103.**

The charging cable **103** has an at least substantially flat cross-section, which is illustrated in **FIG. 4. FIG. 4** is an exemplary 3D illustration of the charging cable **103.**

The term a least substantially flat refers to that the cross-section may be completely flat, or it may be flat with some tolerance, i.e. it may be almost flat. The term flat may be described as having a level surface, being without raised areas etc. As will described later, the charging cable **103** comprises a current cable **110** surrounded by an outer cover **113,** which leads to that the charging cable **103** has a certain height. Even though with a certain height, the charging cable **103** is herein considered to be at least substantially flat.

For example, the width **w** of the charging cable **103,** may be in the range 1-12cm, with some tolerance, and the height **h** of the charging cable **103** may be in the range 0.5-5cm, with some tolerance. The width **w** may be substantially longer than the height **h** of the charging cable **103,** such that the charging cable **103** has a rectangular or somewhat rectangular cross-section, as illustrated in **FIG. 4****.**

A long charging cable **103** may have a width **w** and height **h** which is larger than a shorter charging cable **103,** i.e. the width **w** and heigh **h** to of the charging cable **103** may increase with increasing length.

The charging cable **103** may have a length in a range such that it extends between the charging station **105** and the marine vessel **100.** The length of the charging cable **103** may be in the range of 4-50 meter or any suitable range. The length of the charging cable **103** may depend on the application, e.g. the type of marine vessel **100.** For example, a charging cable **103** used for charging a jet ski may be shorter than a charging cable **103** used for charging a tanker.

As exemplified in **FIG. 4****,** the charging cable **103** comprises a current cable **110** arranged to convey current from the charging station **105** to the marine vessel **100.** The current cable **110** is surrounded by an outer cover **113.** The current cable **110** may comprise copper wires.

The outer cover **113** of the charging cable **103** is made of a flexible material which enables it to be rolled onto the cable reel **108,** for example PVC, rubber, a waterproof material etc. Consequently, the other parts comprised in the charging cable **103** also has a flexible character such that it can be rolled onto the cable reel **108.**

The charging cable **103** may comprise a structural reinforcement layer. The structural reinforcement layer may be incorporated in the outer cover **113** of the charging cable **103,** or it may be located outside and surrounding the outer cover **113.** The structural reinforcement layer enables the charging cable **103** to function as a mooring rope for the marine vessel **100.** Thus, the charging cable **103** may be a combined charging and mooring cable. The structural reinforcement layer may comprise flexible metal wires, it may comprise fibers with a strength above a strength threshold, composite materials, etc.

The charging cable **103** may comprise a cooling system **115.** The cooling system **115** may be referred to as a cooling circuit. The cooling system **115** may be arranged to reduce or regulate the temperature generated by electric circuits in the charging cable **103,** in the marine vessel **100** and/or the charging station **105.** e.g. electric circuits such as power electronics related to the charging of the marine vessel **100.**

The cooling system **115** may be arranged between the current cable **110** and the outer cover **113.** The cooling system **115** may be arranged to provide cooling for the current cable **110.** It may be desirable to reduce or avoid overheating of power electronics since they may reduce the lifetime of the power electronics, it may affect the charging speed etc.

The cooling system **115** may comprise a coolant. The coolant may be of any suitable type, for example air, liquid, gas etc.

The cooling system **115** may be a cavity between the outer cover **113** and the current cable **110.**

The cooling system **115** may be a closed system or an open system.

When the cooling system **115** is a closed system, then the coolant may be inserted or provided into the cooling system **115** during manufacturing of the charging cable **103** and the coolant is typically not removed from the charging cable **103** during the lifetime of the charging cable **103.**

When the cooling system **115** is an open system, then the coolant may enter and exit the cooling system **115** during operation. The coolant may enter the cooling system **115** at an entry point and exit the cooling system **115** at an exit point. In one example, the coolant may be sea water. The charging station **105** may comprise a pump arranged to pump sea water from the sea and into the charging cable **103.** At least a part of the charging cable **103** may be submersed in sea water during charging and the entry point for the coolant may be located at a point which is submersed, or the entry point for the coolant may be at a point which is inside the charging station **105,** e.g. close to the end of the charging cable **103** connected to the charging station **105,** close to the pump or at any other suitable point.

The coolant may circulate in the charging cable **103** or it may be stationary.

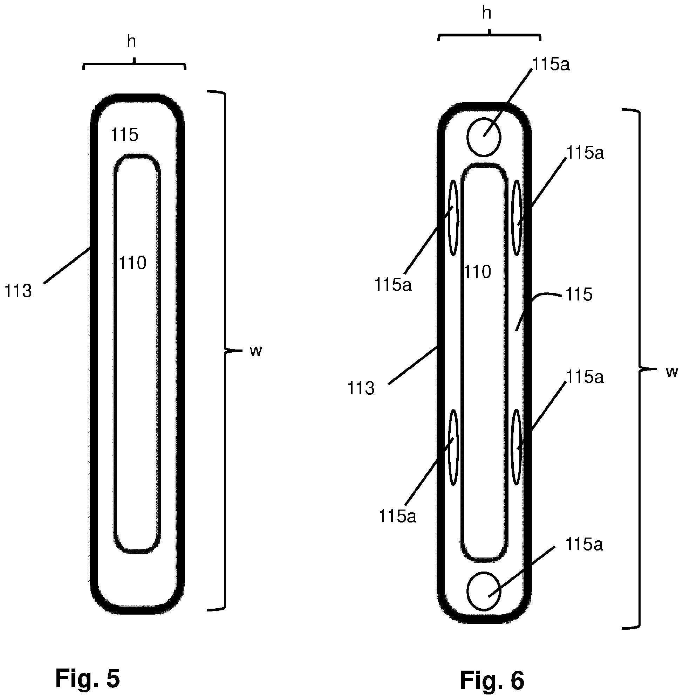

The coolant may be comprised in the whole area between the current cable **110** and the outer cover **113,** as illustrated in **FIG. 4** and **FIG. 5****,** i.e. the coolant surrounds the current cable **110.**

**FIG. 6** illustrates an example where the coolant is comprised in one or more subareas **115a** of the cooling system **115.** For example, the cooling system **115** may comprise one or more subareas **115a** in the form of pipes arranged at suitable distances from each other, and where the coolant is comprised in the pipes. Six subareas **115a** in the form of pipes are exemplified in **FIG.6****,** but any other suitable number of subareas **115a** may be applicable. The areas between the subareas **115a** may comprise air, it may comprise the same material as the outer cover **113** or it may comprise any other suitable material.

The charging cable **103** comprises a plug (not shown) in each end which facilitates connection between the charging cable **103** and the charging station **105** in the first end **103a** and between the charging cable **103** and the marine vessel **100** in the second end **103b.**

Summarized, the disclosure provides a charging cable **103** for charging an at least partly electrically driven marine vessel **100.** The charging cable **103** has an at least substantially flat cross-section and is arranged to be rolled up onto a cable reel **108.**

The charging cable **103** may comprise a structural reinforcement layer **113** to function as a mooring rope for the marine vessel **100.**

The charging cable **103** may comprise a cooling system **115,** and the cooling system **115** may comprise a coolant.

The charging cable **103** may be arranged to be connected to a land-based charging station **105** in a first end and to the marine vessel **100** in a second end, or the charging cable **103** may be arranged to be connected to a sea-based charging station **105** in the first end and to the marine vessel **100** in the second end.

The charging cable **103** may comprise an outer layer made of a waterproof material.

The charging station **105** may comprise the charging cable **103.**

The charging station **105** may comprises a cable reel **108** arranged to store the rolled-up charging cable **103.**

An at least partly electrically driven marine vessel **100** may comprise the charging cable **103.**

The disclosure provides a charging cable **103** which is convenient to use, and which is easy to store on a cable reel **108.** The charging cable **103** is arranged to charge a marine vessel **100** from a charging station **105.** The charging cable **103** is flat and arranged to be rolled up onto a cable reel **108** at the charging station **105.**

The flat charging cable **103** may comprise an integrated cooling system **115** for a coolant.

The flat charging cable **103** may comprise a structural reinforcement layer **113** to also function as mooring rope for the marine vessel **100.**

With the at least substantially flat structure of the charging cable **103,** it may provide lateral stability and is easy to roll up onto a cable reel **108.**

The flat charging cable **103** may comprise sufficient mechanical strength to also function as mooring rope for the marine vessel **100.** The charging cable **103** may then keep the marine vessel **100** in position during charging without additional mooring, which is convenient.

The flat charging cable **103** may comprises a cooling system **115** for a coolant to flow through the charging cable **103.** This cooling system **115** may be arranged to provide cooling for the power electronics of the charging system, both on the marine vessel **100** and in the charging station **105.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A charging cable (103) for charging an at least partly electrically driven marine vessel (100),
wherein the charging cable (103) has an at least substantially flat cross-section and is arranged to be rolled up onto a cable reel (108).

2. The charging cable (103) according to claim 1, wherein the charging cable (103) comprises a structural reinforcement layer (113) to function as a mooring rope for the marine vessel (100).

3. The charging cable (103) according to any of claims 1-2, wherein the charging cable (103) comprises a cooling system (115), and wherein the cooling system (115) comprises a coolant.

4. The charging cable (103) according to any of claims 1-3, wherein the charging cable (103) is arranged to be connected to a land-based charging station (105) in a first end and to the marine vessel (100) in a second end, or
wherein the charging cable (103) is arranged to be connected to a sea-based charging station (105) in the first end and to the marine vessel (100) in the second end.

5. The charging cable (103) according to any of claims 1-4, wherein the charging cable (103) comprises an outer layer made of a waterproof material.

6. A charging station (105) comprising a charging cable (103) according to any of claims 1-5.

7. The charging station (105) according to claim 6, wherein the charging station (105) comprises a cable reel (108) arranged to store the rolled-up charging cable (103).

8. An at least partly electrically driven marine vessel (100) comprising a charging cable (103) according to any of claims 1-5.
